(19) Europäisches Patentamt

European Patent Office

Office européen des brevets

(11) Veröffentlichungsnummer: **0 334 997 B1**

(12) **EUROPÄISCHE PATENTSCHRIFT**

(45) Veröffentlichungstag der Patentschrift: **25.03.92**

(21) Anmeldenummer: **88117709.1**

(22) Anmeldetag: **25.10.88**

(51) Int. Cl.⁵: **F24J 2/34**

(54) **Sonnenkollektor.**

(30) Priorität: **26.03.88 DE 8804125 U**

(43) Veröffentlichungstag der Anmeldung:
**04.10.89 Patentblatt 89/40**

(45) Bekanntmachung des Hinweises auf die
Patenterteilung:
**25.03.92 Patentblatt 92/13**

(84) Benannte Vertragsstaaten:
**AT BE CH DE ES FR GR IT LI NL**

(56) Entgegenhaltungen:
**DE-A- 3 323 999**
**US-A- 4 520 795**
**US-A- 4 587 952**

(73) Patentinhaber: **Viessmann, Hans, Dr.**
**Im Hain 24**
**W-3559 Battenberg/Eder(DE)**

(72) Erfinder: **Viessmann, Hans, Dr.**
**Im Hain 24**
**W-3559 Battenberg/Eder(DE)**

(74) Vertreter: **Wolf, Günter, Dipl.Ing.**
**Patentanwälte Dipl.-Ing. Amthor Dipl.-Ing.**
**Wolf Postfach 70 02 45 An der Mainbrücke 16**
**W-6450 Hanau 7(DE)**

EP 0 334 997 B1

# Beschreibung

Die Erfindung betrifft einen Sonnenkollektor für die Ausnutzung der Sonnenwärme zur Bereitung von hei dem Brauch- bzw. Heizungswasser gemäß Oberbegriff des Hauptanspruches.

Ein Sonnenkollektor der gattungsgemäßen Art ist nach der DE-A -33 23 999 bekannt. Abgesehen von der Ausnutzung der Vorund Rücklaufanschlüsse als Halter bzw. Träger für Gehäuse und Speicherbehälter gemäß US-A- 4 587 952 sind Sonnenkollektoren nach der DE-A -24 36 986 und 30 27 570 und nach den US-A-1,068,650, 3,363,618 und 4,355,629 bekannt. Diese vorbekannten Sonnenkollektoren, die auch als Speicherkollektoren bezeichnet werden, stellen konstruktiv relativ aufwendige Gebilde dar, da die Umschließungsgehäuse für den Speicherbehälter als tragfähige Elemente ausgebildet sind, mit denen der Gesamtkollektor auf geeigneten Unterlagen oder Tragkonstruktionen montiert werden muß. Diese mehr oder weniger aufwendigen Gehäuse schlagen sich aber in den Kosten nieder, die aber häufig gerade in den Bereichen, in denen ausreichende Sonneneinstrahlung gegeben ist, nicht zur Verfügung stehen. Außerdem steht in solchen Gebieten häufig kein ausreichend geschultes Personal zur Verfügung, um solche Kollektoren montieren zu können. Da bei solchen Geräten die Auflast in das den Speicherbehälter umschließende Gehäuse eingeleitet wird, müssen außerdem die Umschließungsgehäuse auf der Montageseite entsprechend stabil ausgebildet sein. Lediglich beim Kollektor nach der US-A -4 587 952 ist dies nicht der Fall, da hierbei die seitlich von den Behälterböden abgehenden Vor-und Rücklaufanschlüsse bzw. - leitungen die Tragfunktion übernehmen. Damit wird zwar das Umschließungsgehäuse des Speicherbehälters entlastet, aber die übernommene Tragfunktion ist nur eine mittelbare, da die Aufstellung dieses Sonnenkollektors besondere Lagerböcke verlangt. Außerdem sind in bezug auf die Anordnung der sich axial erstreckenden Vor- und Rücklaufleitungen die Belastungsverhältnisse denkbar ungünstig, da diese Leitungen an den äußersten Enden (Böden) des Speicherbehälters angeschlossen sind, d.h., die Anschlußschweißnähte und auch die Leitungen selbst müssen entsprechend stark dimensioniert werden.

Der Erfindung liegt demgemäß die Aufgabe zugrunde, einen Sonnenkollektor der eingangs genannten Art dahingehend zu verbessern, daß die Montage wesentlich erleichtert werden kann, und das Ganze mit wesentlich geringeren Kosten und Materialaufwand sowohl hinsichtlich der Fertigung als auch der Montage verbunden ist.

Diese Aufgabe ist mit einem Sonnenkollektor der eingangs erwähnten Art nach der Erfindung durch die im Kennzeichen des Hauptanspruches angeführten Merkmale gelöst. Vorteilhafte Weiterbildungen ergeben sich nach den Unteransprüchen.

Bei dieser erfindungsgemäßen Ausbildung des Sonnenkollektors sind vorteilhaft die sowieso notwendigen Vor- und Rücklaufanschlüsse für das den Speicherbehälter durchströmende Wärmeträgermedium unmittelbar als Träger für den eigentlichen Speicherbehälter ausgenutzt, so daß das Umschließungsgehäuse keinerlei Tragfunktionen zu erfüllen hat und entsprechend leicht ausgebildet werden kann. Da die Vor- und Rücklaufanschlüsse nach unten abgehend direkt am Speicherbehälter angeschlossen sind, wird die Auflast über diese Vor- und Rücklaufanschlüsse direkt in die Tragkonstruktion (normalerweise wird dies eine Dachbalkenkonstruktion sein) für den Sonnenkollektor eingeleitet, wobei die an den Anschlüssen angeordneten Montageauflagen die Auflast direkt in die Dachbalken einleiten. Dies bedeutet, daß im Träger, seien es nun Balken oder sonstige Dachkonstruktionen, lediglich zwei entsprechend bemessene Löcher angebracht werden müssen, in die die Vorund Rücklaufanschlüsse lediglich einzustecken sind, bis die Montageauflagen am jeweiligen Träger zur Auflage kommen. Zweckmäßig sind dabei die Auflageelemente in Form von Montageflanschen ausgebildet, die dann in geeigneter Weise am Träger festgelegt werden. Sofern die Balken für die Einbringung entsprechend zum Bemessen der Löcher zu schwach sein sollten, steht natürlich nichts entgegen, an den Balken geeignete Halter anzuordnen. In Rücksicht darauf können auch die Montageauflagen an den Vor- und Rücklaufanschlüssen entsprechend breit bemessen werden, um diese auf zwei benachbarten Balken auf setzen zu können. Um die Wandstärke des Speicherbehälters möglichst dünn halten zu können, sind vorteilhaft an den Vor- und Rücklaufanschlüssen ringförmige Tragflächen angeordnet, die mit der Wand des Behälters fest verbunden sind. Dadurch wird der Anschlußbereich der Vor- und Rücklaufanschlüsse am Speicherbehälter verstärkt, damit die Auflast nicht zu Verformungen an der Behälterwand im Anschlußbereich der Vor- und Rücklaufanschlüsse führt. Solche Tragflächen an den Anschlüssen können bspw. auch durch eine sich über die gesamte Behälterlänge erstreckende Tragfläche gebildet sein.

Der erfindungsgemäße Sonnenkollektor wird zwar insgesamt als installationsfertige Einheit vorgesehen, also einschließlich seines Umschließungsgehäuses, es ist aber auch möglich, den Kollektor derart weiter auszubilden, daß der wärmeisolierte Teil des Gehäuses aus zwei identischen Teilen gebildet ist, wobei in der Trennebene beider Teile die Vor- und Rücklaufanschlüsse angeordnet sind und beide Teile Anschlußdurchgriffsausnehmungen aufweisen. Dadurch ist es vorteilhaft möglich, das Umschließungsgehäuse erst anzubringen, wenn der Speicherbehälter mit seinen erfindungsgemäß ausgebildeten Vor- und Rücklaufanschlüssen montiert ist, da dann erst nach der Montage des Speicherbehälters die beiden Gehäuseteile bequem als Schalen an den Speicherbehälter angelegt und dann die lichtdurchlässige Abdeckhaube mit entsprechender Distanz zum Speicherbehälter aufgesetzt werden können. Dies hat außerdem den Vorteil, daß das Außengehäuse nicht mehr den Beschädigungsgefahren bei der Montage des Ganzen ausgesetzt ist.

Da die Vor- und Rücklaufanschlüsse erfindungsgemäß zur Montageseite hin vom Speicherbehälter abgehen, können diese vorteilhaft weiter derart ausgebildet sein, daß an diesen Anschlüssen Gehäusewandauflagen angeordnet sind, was noch näher erläutert wird.

Insbesondere für den Fall der nachträglichen Anbringung des Umschließungsgehäuses ist vorteilhaft vorgesehen, das Gehäuse mit mindestens einem Umschließungsring zu versehen. Dadurch sind sonst erforderliche Halte- und Anschlußkonstruktionen für die Teile des Umschließungsgehäuses weitgehend entbehrlich, da die Gehäuseteile von den Umschließungsringen bandagenartig am Speicherbehälter gehalten werden können. Da die Vor- und Rücklaufanschlüsse nach unten zur Auflageseite hin abgehen, können die Ringe ohne weiteres von der Seite her über das Umschließungsgehäuse geschoben werden. Selbstverständlich ist es dabei ohne weiteres möglich, die Umschließungsringe mit Spann- und Öffnungsschlössern geeigneter Art zu versehen.

Insbesondere in Rücksicht auf geneigt verlaufende Dachflächen ist es übrigens auch ohne weiteres möglich, die Vor- und Rücklaufanschlüsse in Form von Leitungspaaren anzuordnen, wobei die Montageflansche an den Leitungspaaren mit entsprechender Neigung angeordnet sind. Dadurch steht der Speicherbehälter am jeweiligen Endbereich nicht nur auf einem Bein, sondern auf zwei Beinen, was übrigens auch dann vorgesehen werden kann, wenn der Speicherbehälter sehr großvolumig ausgebildet ist und bei entsprechender Füllung mit dem Wärmeträgermedium mit einer entsprechend großen Auflast zu rechnen ist.

Der erfindungsgemäße Sonnenkollektor wird nachfolgend anhand der zeichnerischen Darstellung von Ausführungsbeispielen näher erläutert.

Es zeigt schematisch

Fig. 1  einen Längsschnitt durch den Sonnenkollektor;

Fig. 2  einen Querschnitt durch den Sonnenkollektor;

Fig. 3  perspektivisch eine besondere Ausbildung eines Gehäuseteiles, und

Fig. 4  in Draufsicht eine besondere Ausbildung der Montageauflagen.

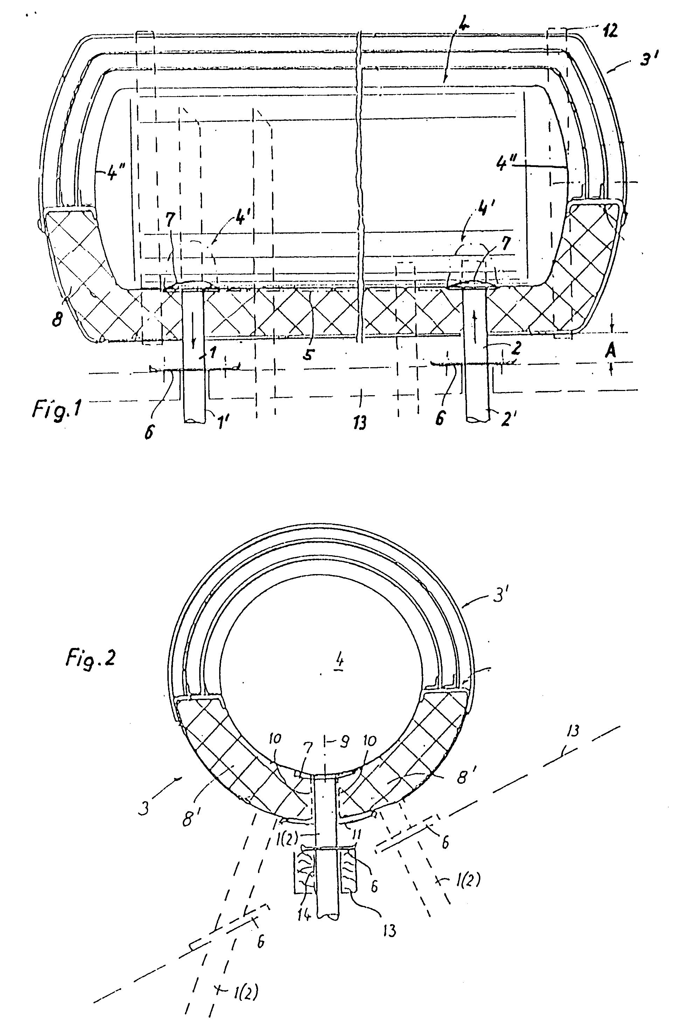

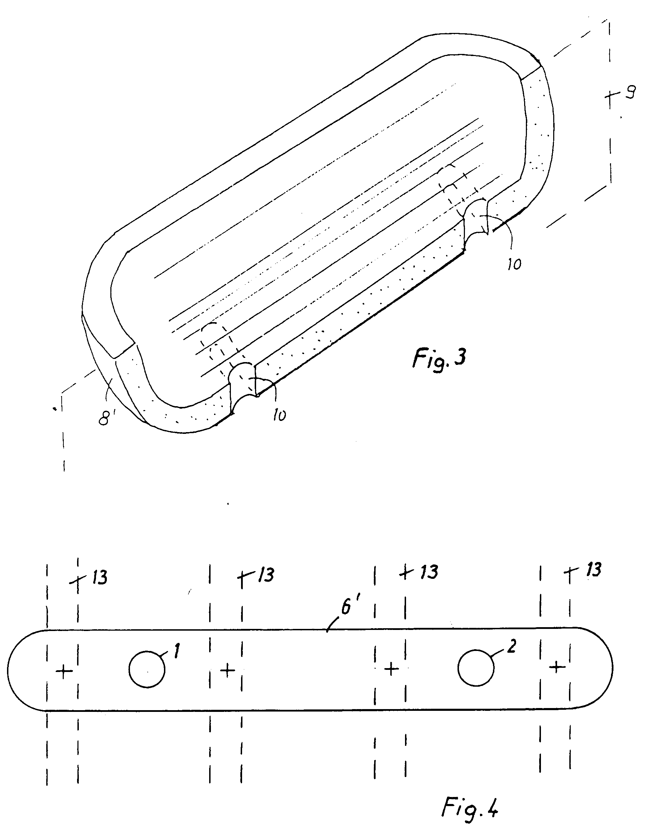

Wie aus Fig. 1, 2 ersichtlich, besteht der Sonnenkollektor aus einem teilweise lichtdurchlässigen Gehäuse 3, in dem der zylindrische, mit gewölbten Böden 4" versehene Speicherbehälter 4 mit Vor- und Rücklaufanschlüssen 1, 2 angeordnet und wobei das Gehäuse 3 auf der licht- bzw. einstrahlungsabgewandten Seite wärmeisoliert ausgebildet ist. Die Vor- und Rücklaufanschlüsse 1, 2 für das den Behälter 3 durchströmende bzw. in diesem gespeicherte Wärmeträgermedium auf der lichtabgewandten Montageseite des Gehäuses 3 sind radial aus diesem herausgeführt und in den Endbereichen 4' des Behälters 4 angeordnet. Die Anschlüsse 1, 2 sind dabei außerhalb des Gehäuses 3 mit zur Gehäusewand 5 im Abstand A angeordneten Montageauflagen 6, bspw. in Form von Montageflanschen versehen. Mit 13 ist ein geeigneter Träger, bspw. in Form eines Dachsparrens verdeutlicht, der vor der Montage des Kollektors mit entsprechend bemessenen Durchgangslöchern 14 versehen wird, so daß die freien Enden 1', 2' der Vor- und Rücklaufanschlüsse 1, 2 in diese Löcher 14 eingesteckt werden können, bis die Montageauflagen 6 zur Anlage kommen. Für den Fall, daß die Dachsparren zur Anbringung von Löchern ungeeignet sein sollten und auch in Rücksicht darauf, bezüglich der Anordnungsdistanz der beiden Anschlüsse 1, 2 nicht auf das Distanzmaß solcher Dachsparren angewiesen zu sein, können gemäß Fig. 4 die Montageauflagen 6 in Form einer sich mindestens zwischen den beiden Anschlüssen 1, 2 erstreckenden, einstückigen Auflagefläche 6' ausgebildet werden. Wie ebenfalls aus Fig. 4 ersichtlich, können dadurch mehrere Träger 13 bzw. Dachsparren an der Lastaufnahme beteiligt werden. Ferner müssen diese Träger 13 nicht mehr durch Bohrungen geschwächt werden, und es muß auch bezüglich der Distanzanordnung der Anschlüsse 1, 2 zueinander nicht mehr auf vorgegebene Distanz der Sparren Rücksicht genommen werden. Nicht dargestellt ist die Anschlußgestaltung der beiden Enden 1', 2' für den Anschluß der nicht dargestellten Zufuhr- und Abflußleitungen für das Wärmeträgermedium. Wie ebenfalls aus Fig. 1 ersichtlich, ist durch diese Konstruktion das Umschließungsgehäuse 3 von jeglichen Auflastbelastungen freigehalten. Der strahlungseinfallseitige und lichtdurchlässige Teil des Gehäuses 3 ist mit 3' bezeichnet, der ggf. auch mehrschalig und wie dargestellt ausgebildet sein kann.

Um die Wand 5 des Behälters 4 möglichst dünn halten zu können, sind die Vor- und Rücklaufanschlüsse 1, 2 mit ringförmigen Tragflächen 7 versehen, die fest mit der Wand 5 des Behälters 4 verbunden sind. Bei diesen Elementen kann es sich auch ohne weiteres um einen sich über die gesamte Länge des Behälters 4, wie strichpunktiert angedeutet, erstreckenden Tragstreifen handeln oder um schalenförmige Auflagen, die in Umfangsrichtung verlängert sind, wie ebenfalls strichpunktiert angedeutet.

Falls es sich beim Behälter 4 um einen großvolumigen Behälter handeln sollte, der zu entsprechend hohen Auflasten führt oder auch für Fälle, bei denen der Träger 13, wie in Fig. 2 angedeutet, geneigt verläuft, können die Vor- und Rücklaufanschlüsse 1, 2 als Leitungspaare ausgebildet werden, wobei dann die Montageauflagen 6 entsprechend geneigt an den Anschlüssen 1, 2 angeordnet sind. Dadurch ergibt sich eine bessere Lastverteilung, wie dies ohne weiteres aus Fig. 2 erkennbar ist. Dabei ist es außerdem ohne weiteres möglich, und dies gilt insbesondere für relativ lange Speicherbehälter 4, die einzelnen Vor- und Rücklaufanschlüsse in bezug auf die Länge des Behälters 4 versetzt zueinander anzuordnen, wie dies ebenfalls gestrichelt in Fig. 1 angedeutet ist.

Sofern der wärmeisolierende Teil 8 des Gehäuses nicht direkt am Behälter 4 bspw. durch Anschäumen geeigneten Kunststoffes fest angeordnet ist, kann auch dieser wärmeisolierende Teil 8 des Gehäuses 3 aus zwei identischen Teilen 8′ gemäß Fig. 3 gebildet werden, wobei in der Trennebene 9 der beiden Teile 8′ die Vor- und Rücklaufanschlüsse 1, 2 angeordnet sind und beide Teile 8′ entsprechend bemessene Anschlußdurchgriffsausnehmungen 10 aufweisen. Durch diese Ausbildungen können diese Gehäuseteile 8′ problemlos nachträglich nach der Montage des Speicherbehälters 4′, wie vorbeschrieben, an den Speicherbehälter 4 angelegt werden, wonach die lichtdurchlässige Schale 3′ über das ganze Gebilde gestülpt wird. In Rücksicht auf eine leichte Applizierbarkeit derartiger, isolierender Gehäuseschalen können, wie in Fig. 2 dargestellt, an den Vor- und Rücklaufanschlüssen 1, 2 Gehäusewandauflagen 11 angeordnet werden. Die Gehäuseschalen 8′ werden dann mit ihren unteren Rändern einfach zwischen diese Wandauflagen 11 und den Behälter 4 eingeschoben und erfahren dadurch schon einen gewissen Halt, der dann vollständig gegeben ist, wenn die äußere Gehäuseschale 3′, wie aus Fig. 1 ersichtlich, über die Ränder der beiden Teile 8′ greift. Um das ganze Umschließungsgehäuse 3 am Behälter 4 festzulegen, können dann einfach um das Gehäuse 3 von jeder Seite her Umschließungsringe 12 geschoben werden, die das untere und obere Gehäuseteil sicher zusammenhalten. Diese Umschließungsringe 12 können, wie vorerwähnt, ggf. mit Spannschlössern (nicht dargestellt) ausgestattet oder in sich elastisch ausgebildet sein.

Sofern die Vor- und Rücklaufanschlüsse 1, 2, wie in Fig. 2 gestrichelt angedeutet, als Paare ausgebildet sind, müssen im Falle nachträglich applizierbarer Isolationsteile diese natürlich anders ausgebildet sein als das in Fig. 3 dargestellte Isolationsteil, wofür es verschiedene Möglichkeiten gibt. Entweder werden dafür die Anschlußdurchgriffsausnehmungen 10 schlitzartig, wie in Fig. 3 gestrichelt angedeutet, ausgebildet, oder das ganze isolierende Gehäuseunterteil muß mindestens dreiteilig ausgebildet werden. Bevorzugt wird dabei natürlich die Ausbildung in Form zweier identischer Schalen im Sinne der Fig. 3 mit entsprechenden schlitzförmigen Ausbildungen, wobei dann die nach Anlegen an den Behälter 4 freibleibenden Schlitzräume problemlos mit geeignetem Isolationsmaterial ebenfalls geschlossen werden können.

**Patentansprüche**

1. Sonnenkollektor, bestehend aus einem einstrahlungsseitig lichtdurchlässigen und auf der lichtabgewandten Seite wärmeisoliert ausgebildeten Gehäuse (3), in dem ein zylindrischer, mit gewölbten Böden (4") versehener Speicherbehälter (4) mit Vor- und Rücklaufanschlüssen (1, 2) angeordnet ist, die das Gehäuse und den Speicherbehälter (4) tragen, **dadurch gekennzeichnet,** daß die Vor- und Rücklaufanschlüsse (1,2) für das Wärmeträgermedium auf der lichtabgewandten Montageseite des Gehäuses (3) radial aus diesem herausgeführt in den Endbereichen (4′) neben den Behälterböden (4") des Behälters (4) angeordnet und außerhalb des Gehäuses (3) mit zur Gehäusewand (5) in Abstand (A) angeordneten Montageauflagen, wie Montageflanschen (6) versehen sind.

2. Kollektor nach Anspruch 1, **dadurch gekennzeichnet,** daß an den Vor- und Rücklaufanschlüssen (1,2) Behältertragflächen (7) angeordnet sind.

3. Kollektor nach Anspruch 1 oder 2, **dadurch gekennzeichnet,** daß an den Vor- und Rücklaufanschlüssen (1, 2) Gehäusewandauflagen (11) angeordent sind.

4. Kollektor nach einem der Ansprüche 1 bis 3, **dadurch gekennzeichnet,** daß die Vor- und Rücklaufanschlüsse (1, 2) als Anschlußpaare ausgebildet sind.

5. Kollektor nach einem der Ansprüche 1 bis 4, **dadurch gekennzeichnet,** daß der wärmeisolierende Teil (8) des Gehäuses (3) aus zwei identischen Teilen (8′) gebildet ist, wobei in der Trennebene (9) beider Teile (8′) die Vor- und Rücklaufanschlüsse (1, 2) angeordnet und beide Teile (8′) des Gehäuses (3) mit Anschlußdurchgriffsausnehmungen (10) versehen sind.

6. Kollektor nach Anspruch 5,
**dadurch gekennzeichnet,**
daß das Gehäuse (3) mit mindestens einem Umschließungsring (12) versehen ist.

7. Kollektor nach Anspruch 6,
**dadurch gekennzeichnet,**
daß bei Anordnung eines zum Gehäuse (3) mittigen Umschließungsringes (12) dieser als zu öffnender und spannbarer Ring (12') ausgebildet ist und bei Anordnung von zwei Umschließungsringen (12) diese von den Seiten her auf das Gehäuse (3) aufgeschoben sind.

8. Kollektor nach Anspruch 7,
**dadurch gekennzeichnet,**
daß die seitlich aufgeschobenen Umschließungsringe (12) ebenfalls spannbar ausgebildet sind.

9. Kollektor nach einem der Ansprüche 1 bis 8,
**dadurch gekennzeichnet,**
daß die Montageauflagen (6) für die Vor- und Rücklaufanschlüsse (1, 2) in Form einer sich mindestens zwischen den beiden Anschlüssen (1, 2) erstreckenden, einstückigen Auflagefläche (6') ausgebildet sind.

## Claims

1. A solar collector comprising a housing (3) so designed as to be light-transmissive on the irradiated side and heat insulated on the side facing away from the light source, with a cylindrically shaped storage vessel (4) provided with arcuate bottoms (4") and having advance and return connections (1,2) supporting the housing (3) and the storage vessel (4) being located in said housing (3),
characterized in that the advance and return connections (1,2) for the heat carrier medium on the assembling side of the housing (3) facing away from the light source, radially, are guided out of the said housing and disposed in the end area (4') next to the vessel bottoms (4") of the vessel (4) and, externally of the housing (3), are provided with mounting supports, such as mounting flanges (6), disposed at a space (A) from the housing wall (5).

2. A solar collector according to claim 1,
characterized in that bearing faces (7) for the vessel are disposed at the advance and return connections (1,2).

3. A solar collector according to claims 1 or 2, characterized in that the housing wall supports (11) are disposed on the advance and return connections (1,2).

4. A solar collector according to any one of claims 1 to 3,
characterized in that the advance and return connections (1,2) are designed as connecting pairs.

5. A solar collector according to any one of claims 1 to 4,
characterized in that the heat-insulating part (8) of the housing (3) is formed of two identical parts (8'), with the advance and return connections (1,2) being disposed in the separating plane (9) of the two parts (8') and both parts (8') of the housing (3) being provided with passage recesses (10) for connecting purposes.

6. A solar collector according to claim 5, characterized in that the housing (3) is provided with at least one enclosure ring (12).

7. A solar collector according to claim 6, characterized in that when providing one enclosure ring (12) arranged centrally to the housing (3) such ring is configured as a ring (12') capable of being opened and loaded while in case of a provision of two enclosure rings (12), these are laterally pushed onto the housing (3).

8. A solar collector according to claim 7, characterized in that the laterally pushed-on enclosure rings (12), equally, are of a loadable design.

9. A solar collector according to any one of claims 1 to 8,
characterized in that the mounting supports (6) for the advance and return connections (1,2) are in the form of an integral bearing face (6') extending at least between the two connections (1,2).

## Revendications

1. Collecteur solaire constitué par un bâti (3) configuré en étant perméable à la lumière du côté de l'irradiation par les rayons du soleil et isolé à la chaleur du côté détourné de la lumière dans lequel est placé un accumulateur (4) cylindrique, pourvu de fonds voûtés (4"), avec des raccords aller et retour (1, 2) qui portent le bâti (3) et l'accumulateur (4),

**caractérisé en ce**
que les raccords aller et retour (1, 2) pour l'agent caloporteur sortent radialement du bâti (3) sur le côté montage détourné de la lumière de celui-ci, qu'ils sont placés dans les zones d'extrémité (4') à côté des fonds (4") de l'accumulateur (4) et qu'ils sont pourvus à l'extérieur du bâti (3) d'appuis de montage, tels que des brides de montage (6), placés à un écart (A) de la paroi du bâti (5).

2. Collecteur selon la revendication 1,
   **caractérisé en ce**
   que des surfaces d'appui d'accumulateur (7) sont placées sur les raccords aller et retour (1, 2).

3. Collecteur selon la revendication 1 ou 2,
   **caractérisé en ce**
   que des appuis de paroi de bâti (11) sont placés sur les raccords aller et retour (1, 2).

4. Collecteur selon l'une des revendications 1 à 3,
   **caractérisé en ce**
   que les raccords aller et retour (1, 2) sont configurés comme des paires de raccord.

5. Collecteur selon l'une des revendications 1 à 4,
   **caractérisé en ce**
   que la partie isolante à la chaleur (8) du bâti (3) est formée de deux parties identiques (8'), les raccords aller et retour (1, 2) étant placés dans le plan de séparation (9) de ces deux parties (8') et les deux parties (8') du bâti (3) étant pourvues de creux de pénétration de raccord (10).

6. Collecteur selon la revendication 5,
   **caractérisé en ce**
   que le bâti (3) est pourvu d'au moins un anneau d'entourage (12).

7. Collecteur selon la revendication 6,
   **caractérisé en ce**
   que, lors de la disposition d'un anneau d'entourage (12) centré par rapport au bâti (3), cet anneau est configuré comme un anneau à ouvrir et à tendre (12') et que, pour la disposition de deux anneaux d'entourage (12), ceux-ci sont enfilés sur le bâti (3) par les côtés.

8. Collecteur selon la revendication 7,
   **caractérisé en ce**
   que les anneaux d'entourage (12) enfilés latéralement sont configurés en pouvant également être tendus.

9. Collecteur selon l'une des revendications 1 à 8,
   **caractérisé en ce**
   que les appuis de montage (6) pour les raccords aller et retour (1,2 2) sont configurés en forme d'une surface d'appui (6') en une pièce qui s'étend au moins entre les deux raccords (1, 2).

Fig.1

Fig.2

Fig. 3

Fig. 4